# EUROPEAN PATENT APPLICATION

(11) **EP 2 991 363 A1**
(43) Date of publication of application: **02.03.2016**
(21) Application number: 14834561.4
(22) Date of filing: 06.08.2014
(51) Int. Cl.: H04Q 1/24, H04Q 1/48, H04M 1/02

(54) **WIRELESS COMMUNICATIONS DEVICE**

(30) Priority: 06.08.2013 CN 201310339216
(71) Applicant: Huawei Device Co., Ltd., Longgang District Shenzhen Guangdong 518129 (CN)
(72) Inventor: LI, Yuanpeng, Shenzhen Guangdong 518129 (CN); YU, Yafang, Shenzhen Guangdong 518129 (CN); HOU, Meng, Shenzhen Guangdong 518129 (CN)
(74) Representative: Maiwald Patentanwalts GmbH
(86) International application number: PCT/CN2014/083788
(87) International publication number: WO 2015/018339

(57) **Abstract**

Embodiments of the present invention provide a wireless communications device. Two antennas, namely, a first antenna and a second antenna, are disposed on the wireless communications device, where an electrical length of the first antenna is N times an electrical length of the second antenna, where N is an integer greater than or equal to 1; and the first antenna and the second antenna are disposed on a printed circuit board by means of common ground connection, that is, ground points of the first antenna and the second antenna are a same ground point, which reduces input impedance at the ground point of the first antenna and the second antenna, so that energy fed from the antennas is evenly distributed in a horizontal direction and a vertical direction of the printed circuit board, thereby reducing a SAR without degrading communication quality of the wireless communications device.

## Description

### TECHNICAL FIELD

Embodiments of the present invention relate to communications technologies, and in particular, to a wireless communications device.

### BACKGROUND

As information technologies develop, the public also pays attention to harm of electromagnetic radiation of wireless communications devices to the human body while enjoying convenience brought by information technologies. A specific absorption rate (Specific Absorption Rate, hereinafter referred to as SAR for short) value of electromagnetic waves is an important indicator for measuring harm of electromagnetic radiation to the human body, and a larger SAR value indicates greater harm to the human body.

To reduce harm of electromagnetic radiation to the human body, in the prior art, an SAR value is reduced by reducing transmit power of a wireless communications device.

However, transmit power of a wireless communications device is related to communication quality, and reducing transmit power of a wireless communications device is equivalent to degrading communication quality of the wireless communications device. In other words, the method in the prior art degrades communication quality of a wireless communications device while reducing an SAR.

### SUMMARY

Embodiments of the present invention provide a wireless communications device, which reduces a SAR without degrading communication quality of the wireless communications device.

A first aspect of the embodiments of the present invention provides a wireless communications device, including:
a printed circuit board; and
a first antenna and a second antenna, where
an electrical length of the first antenna is N times an electrical length of the second antenna, where N is an integer greater than or equal to 1; and
the first antenna and the second antenna are disposed on the printed circuit board by means of common ground connection.

With reference to the first aspect, in a first possible implementation manner, the first antenna and the second antenna are symmetrically disposed in a horizontal direction of the wireless communications device; or
the first antenna and the second antenna are symmetrically disposed in a vertical direction of the wireless communications device.

With reference to the first aspect or the first possible implementation manner, in a second possible implementation manner, the wireless communications device further includes:
a first parasitic branch disposed at a feed terminal of the first antenna in a detached manner, and a second parasitic branch disposed at a feed terminal of the second antenna in a detached manner.

With reference to the first aspect, or the first possible implementation manner, or the second possible implementation manner, in a third possible implementation manner, the wireless communications device is a mobile phone.

Two antennas, namely, a first antenna and a second antenna, are disposed on the wireless communications device provided in the embodiments of the present invention, where an electrical length of the first antenna is N times an electrical length of the second antenna, where N is an integer greater than or equal to 1; and the first antenna and the second antenna are disposed on a printed circuit board by means of common ground connection, that is, ground points of the first antenna and the second antenna are a same point, which reduces input impedance at the ground point of the first antenna and the second antenna, so that energy fed from the antennas is evenly distributed in a horizontal direction and a vertical direction of the printed circuit board, thereby reducing a SAR without degrading communication quality of the wireless communications device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of Embodiment 1 of a wireless communications device according to the present invention;
FIG. 2 is a schematic structural diagram of a wireless communications device according to the prior art;
FIG. 3 is a schematic structural diagram of Embodiment 2 of a wireless communications device according to the present invention;
FIG. 4 is a schematic structural diagram of Embodiment 3 of a wireless communications device according to the present invention;
FIG. 5 is a schematic structural diagram of Embodiment 4 of a wireless communications device according to the present invention; and
FIG. 6 is a schematic structural diagram of Embodiment 5 of a wireless communications device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the embodiments of the present invention, two antennas are disposed on a wireless communications device by means of common ground connection, and an electrical length of one antenna in the two antennas is N times an electrical length of the other antenna, where N is an integer greater than or equal to 1, which reduces input impedance at a ground point of the two antennas, so that energy fed from feed points of the antennas is evenly distributed in a horizontal direction and a vertical direction of a printed circuit board (Printed Circuit Board, hereinafter referred to as PCB for short), thereby reducing a SAR without degrading communication quality of the wireless communications device. The horizontal direction and the vertical direction are perpendicular to each other, and are both on a same plane in parallel with a plane of the PCB.

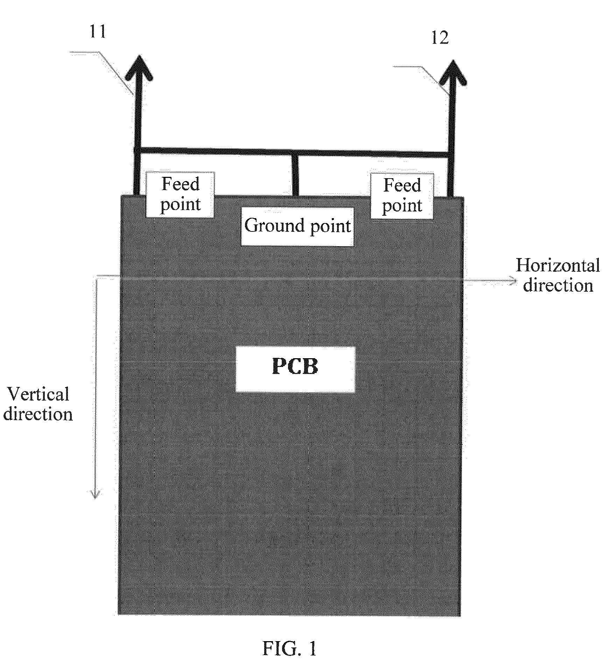

FIG. 1 is a schematic structural diagram of Embodiment 1 of a wireless communications device according to the present invention. The wireless communications device in this embodiment includes a mobile phone, a notebook computer, a tablet computer (PAD), and the like. A mobile phone is used as an example, and as shown in FIG. 1, the wireless communications device provided in this embodiment includes: a first antenna 11, a second antenna 12, and a PCB board, where an electrical length of the first antenna 11 is N times an electrical length of the second antenna 12, where N is an integer greater than or equal to 1; and the first antenna 11 and the second antenna 12 are disposed on the PCB board by means of common ground connection, where that the first antenna 11 and the second antenna 12 are disposed by means of common ground connection refers that a ground point of the first antenna and a ground point of the second antenna are a same ground point. A specific value of N is related to a specification and a size of the wireless communications device, and N may be 1 for a mobile phone, that is, the electrical length of the first antenna and the electrical length of the second antenna are the same. Certainly, the first antenna and the second antenna are relative, provided that an electrical length of one antenna is N times an electrical length of the other antenna.

An electrical length of an antenna is different from a physical length and refers to a ratio of a length of a transmission line of the antenna to an operating wavelength, and a transmission line of an antenna includes a radiating branch and a ground cable branch of the antenna (where a detailed example is provided below). When two antennas, of which one has an electrical length N times that of the other, are disposed by means of common ground connection, input impedance at a ground point of the two antennas can be reduced, and the principle is as follows: Assuming that one of two antennas is a first antenna and the other is a second antenna, an electrical length of the second antenna is N times an electrical length of the first antenna, and the first antenna and the second antenna are disposed on a PCB board by means of common ground connection, the second antenna is equivalent to an open-circuit microstrip connected in parallel with the first antenna. It can be known from a basic theory of a principle of microwaves that a microstrip can be equivalent to an inductor or a capacitor, input impedance at a terminal (a terminal opposite a ground point) of a microstrip (the second antenna) with an open-circuit terminal is infinitely great, and the input impedance becomes rather small after passing through the first antenna whose electrical length is N times the electrical length of the second antenna, which, therefore, is equivalent that a small impedor is connected in parallel at a ground point of the first antenna. It can be known from a basic circuit theory that shunt impedance mainly depends on a value of the small impedor; therefore, input impedance in the case of common ground connection is reduced.

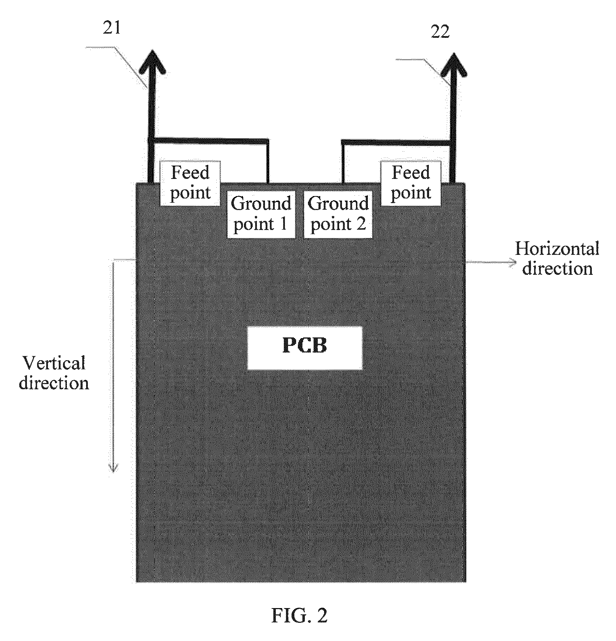

FIG. 2 is a schematic structural diagram of a wireless communications device according to the prior art. As shown in FIG. 2, a first antenna and a second antenna do not have electrical lengths of which one is N times the other and/or are not disposed by means of common ground connection, a ground point of the first antenna 21 is a ground point 1, and a ground point of the second antenna 22 is a ground point 2. Because a SAR value is related to distribution of energy, on a PCB board, fed from feed points of antennas, when the first antenna and the second antenna are not disposed by means of common ground connection, both input impedance at the first ground point 1 and input impedance at the second ground point 2 are rather large, and as a result, energy fed from an antenna feed point 1 and an antenna feed point 2 is not evenly distributed in a horizontal direction and a vertical direction of the PCB board. Because the energy is not evenly distributed on the PCB board, an area in which energy is concentrated (a hotspot area) exists. Because the area in which energy is concentrated exists, a SAR value of the wireless communications device is high. In this embodiment of the present invention, as shown in FIG. 1, two antennas, namely, the first antenna 11 and the second antenna 12, are disposed on the wireless communications device, where the electrical length 11 of the first antenna is N times the electrical length 12 of the second antenna, where N is an integer greater than or equal to 1; the first antenna 11 and the second antenna 12 are disposed on the PCB board by means of common ground connection; and a ground point of the first antenna and a ground point of the second antenna are a same ground point. By means of the foregoing arrangement, in comparison with when the first antenna and the second antenna do not have electrical lengths of which one is N times the other and/or are not disposed by means of common ground connection shown in FIG. 2, input impedance at the ground point 1 of the first antenna and the ground point 2 of the second antenna can be reduced, so that energy fed from the antennas is evenly distributed in a horizontal direction and a vertical direction of the PCB board, thereby reducing a SAR without degrading communication quality of the wireless communications device.

In the foregoing embodiment, the first antenna and the second antenna may be symmetrically disposed in a horizontal direction of the wireless communications device, or may be symmetrically disposed in a vertical direction of the wireless communications device. The horizontal direction and the vertical direction of the wireless communications device are on a same plane in parallel with a plane of the PCB board of the wireless communications device, and the horizontal direction and the vertical direction are perpendicular to each other. In this embodiment, that the first antenna and the second antenna may be symmetrically disposed in a horizontal direction of the wireless communications device refers that the electrical lengths of the first antenna and the second antenna are the same, a position at which the first antenna is disposed is symmetrical, in the horizontal direction, to a position at which the second antenna is disposed, and a structure of the first antenna is also symmetrical to a structure of the second antenna. In this embodiment, that the first antenna and the second antenna may be symmetrically disposed in a vertical direction of the wireless communications device refers that the electrical lengths of the first antenna and the second antenna are the same, a position at which the first antenna is disposed is symmetrical, in the vertical direction, to a position at which the second antenna is disposed, and a structure of the first antenna is also symmetrical to a structure of the second antenna. A specific arrangement depends on a specific specification of the wireless communications device.

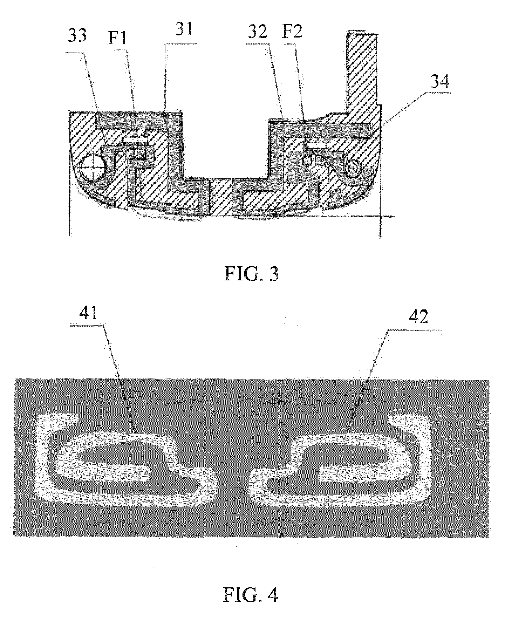

FIG. 3 is a schematic structural diagram of Embodiment 2 of a wireless communications device according to the present invention. As shown in FIG. 3, structures of a first antenna and a second antenna are completely symmetrical, a position at which the first antenna is disposed is symmetrical, in a horizontal direction, to a position at which the second antenna is disposed, the first antenna 31 and the second antenna 32 have a same electrical length, that is, a case in which N is set to 1; F1 is a feed point of the first antenna, F2 is a feed point of the second antenna, where a feed point is a point from which an antenna feeds in or feeds out energy, and a common ground point of the first antenna and the second antenna is not shown. A first parasitic branch 33 is disposed at a feed terminal of the first antenna 31 in a detached manner, and a second parasitic branch 34 is disposed at a feed terminal of the second antenna 32 in a detached manner, where a feed terminal is a terminal at which a feed point of an antenna is located, and the first parasitic branch 33 and the second parasitic branch 34 are used to extend a width of an available frequency band of the wireless communications device. Persons skilled in the art may understand that the first parasitic branch and the second parasitic branch may also not be disposed on the wireless communications device of the present invention. As shown in FIG. 4, FIG. 4 is a schematic structural diagram of Embodiment 3 of a wireless communications device according to the present invention. In the embodiment shown in FIG. 4, the first parasitic branch and the second parasitic branch are not disposed. Whether the first parasitic branch and the second parasitic branch are disposed or not does not affect SAR reduction performance of the wireless communications device of the present invention.

Table 1 shows test data of the wireless communications device shown in FIG. 3 and an existing wireless communications terminal, where in the case of the prior art, test data is from a wireless communications device with two antennas that do not have electrical lengths of which one is N times the other and/or are not disposed by means of common ground connection, and in the case of the present invention, test data is from a wireless communications device with two antennas that have a same electrical length (where N is set to 1) and are disposed by means of common ground connection, as shown in Table 1.

Table 1 shows test data of the wireless communications device shown in FIG. 3 and an existing wireless communications terminal.

| | The Prior Art | | The Present Invention | |
|---|---|---|---|---|
| | SAR | Total Radiated Power dBm | SAR | Total Radiated Power dBm |
| | 1 g (W/kg) | | 1 g (W/kg) | |
| Channel 1 | 1.62 | 21.4 | 1.07 | 21.4 |
| Channel 2 | 2.23 | 21.7 | 0.99 | 21.6 |
| Channel 3 | 1.53 | 21.1 | 0.82 | 21.2 |

Channel 1, channel 2, and channel 3 are located in different frequency bands.

It can be seen from Table 1 that by using the wireless communications device terminal of the present invention, a SAR can be obviously reduced in the case of a same total radiated power (Total Radiated Power, hereinafter referred to as TRP for short).

Table 2 shows test data of the wireless communications device shown in FIG. 4 and an existing wireless communications terminal. Table 2 is as follows:

| | The Prior Art | | The Present Invention | |
|---|---|---|---|---|
| | SAR | Total Radiated Power dBm | SAR | Total Radiated Power dBm |
| | 1 g (W/kg) | | 1 g (W/kg) | |
| Channel 1 | 1.95 | 20.3 | 1.11 | 19.98 |
| Channel 2 | 1.82 | 20.3 | 1.14 | 20 |
| Channel 3 | 2.02 | 20.7 | 1.38 | 20 |

Channel 1, channel 2, and channel 3 are located in different frequency bands.

It can be seen from Table 2 that by using the wireless communications device terminal of the present invention, a SAR can be obviously reduced in the case of a same total radiated power (Total Radiated Power, hereinafter referred to as TRP for short).

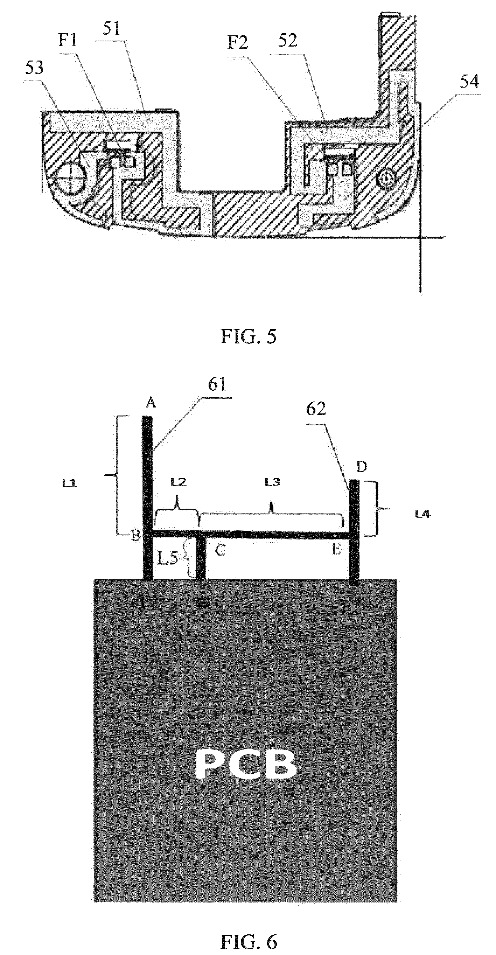

FIG. 5 is a schematic structural diagram of Embodiment 4 of a wireless communications device according to the present invention. As shown in FIG. 5, a position at which a first antenna is disposed is symmetrical, in a horizontal direction, to a position at which a second antenna is disposed. A difference between this embodiment and the embodiment shown in FIG. 3 lies in that in this embodiment, structures of the first antenna and the second antenna are not completely symmetrical, and rotation processing is performed on the second antenna, but SAR reduction performance of the wireless communications device of the present invention is not affected. As shown in FIG. 5, the first antenna 51 and the second antenna 52 have a same electrical length, F1 is a feed point of the first antenna, F2 is a feed point of the second antenna, and a common ground point of the first antenna and the second antenna is not shown. A first parasitic branch 53 is disposed at a feed terminal of the first antenna 51 in a detached manner, and a second parasitic branch 54 is disposed at a feed terminal of the second antenna 52 in a detached manner, where the first parasitic branch 51 and the second parasitic branch 54 are used to extend a width of an available frequency band of the wireless communications device. Persons skilled in the art may understand that the first parasitic branch and the second parasitic branch may also not be disposed on the wireless communications device of the present invention. Whether the first parasitic branch and the second parasitic branch are disposed or not does not affect SAR reduction performance of the wireless communications device of the present invention. SAR reduction performance of the wireless communications device shown in FIG. 5 is the same as that in Table 1, and is not described in detail herein again.

FIG. 1 and FIG. 3 to FIG. 5 merely exemplarily describe arrangements of antenna structures of the wireless communications device of the present invention.

A SAR reduction effect can be achieved provided that two antennas are disposed on a wireless communications device by means of common ground connection and an electrical length of one antenna in the two antennas is N times an electrical length of the other antenna, where N is an integer greater than or equal to 1.

To describe the electrical lengths in the foregoing embodiments more clearly, the present invention further provides a schematic structural diagram of Embodiment 5 of a wireless communications device according to the present invention shown in FIG. 6. As shown in FIG. 6, an length L1 between point A and point B is a radiation branch of a first antenna 61, a ground cable branch of the first antenna 61 extends from point B to point G through point C, where point G is a common ground point, namely, a ground point, of the first antenna 61 and a second antenna 62, an length L4 between point D and point E is a radiation branch of the second antenna 62, and a ground cable branch of the second antenna 62 extends from point E to point G through point C. A length between point B and point C is L2, a length between point E and point C is L3, and a length between point C and point G is L5. Point F1 is a feed point of the first antenna and point F2 is a feed point of the second antenna, and that an electrical length of the first antenna is N times an electrical length of the second antenna refers that (L1+L2+L5) of the first antenna/λ is equal to N times (L3+L4+L5) of the second antenna/λ, where λ represents a wavelength. Certainly, the first antenna and the second antenna are relative, and it may also be that the electrical length of the second antenna 62 is N times the electrical length of the first antenna 61. When N is 1, the electrical lengths are the same (as shown in FIG. 6).

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A wireless communications device, comprising:
a printed circuit board; and
a first antenna and a second antenna, wherein
an electrical length of the first antenna is N times an electrical length of the second antenna, wherein N is an integer greater than or equal to 1; and
the first antenna and the second antenna are disposed on the printed circuit board by means of common ground connection.

2. The wireless communications device according to claim 1, wherein the first antenna and the second antenna are symmetrically disposed in a horizontal direction of the wireless communications device; or
the first antenna and the second antenna are symmetrically disposed in a vertical direction of the wireless communications device.

3. The wireless communications device according to claim 1 or 2, further comprising:
a first parasitic branch disposed at a feed terminal of the first antenna in a detached manner, and a second parasitic branch disposed at a feed terminal of the second antenna in a detached manner.

4. The wireless communications device according to any one of claims 1 to 3, wherein the wireless communications device is a mobile phone.
